# EUROPÄISCHE PATENTANMELDUNG

(11) **EP 4 678 462 A1**
(43) Veröffentlichungstag der Anmeldung: **14.01.2026**
(21) Anmeldenummer: 25187175.2
(22) Anmeldetag: 03.07.2025
(51) Int. Cl.: B60L 53/16, B60L 53/20, B60L 53/302, B60L 58/26, B60L 58/27, H01M 10/613, H01M 10/615, H01M 10/625, H01M 10/6568

(54) **KÜHLSYSTEM ZUM KÜHLEN VON FAHRZEUGKOMPONENTEN EINES BATTERIEELEKTRISCH BETRIEBENEN FAHRZEUGS SOWIE FAHRZEUG MIT ZUMINDEST EINEM SOLCHEN KÜHLSYSTEM**

(30) Priorität: 12.07.2024 DE 102024119941
(71) Anmelder: Voss Automotive GmbH, 51688 Wipperfürth (DE)
(72) Erfinder: Schwarzkopf, Otfried, 51515 Kürten (DE); Mitterer, Reiner, 51688 Wipperfürth (DE)
(74) Vertreter: Rebbereh, Cornelia

(57) **Zusammenfassung**

Bei einem Kühlsystem (1) zum Kühlen von Fahrzeugkomponenten, insbesondere eines Energiespeichers (30), eines batterieelektrisch betriebenen Fahrzeugs, wobei das Kühlsystem (1) zumindest einen ersten Kühlkreislauf (10) mit zumindest einem ersten Kühlmittel und zumindest einem zweiten Kühlkreislauf (20) mit zumindest einem zweiten Kühlmittel umfasst, und wobei das zumindest eine zweite Kühlmittel zum Temperieren von Hochvolt-Fahrzeugkomponenten ausgebildet ist, dient der zumindest eine zweite Kühlkreislauf (20) zum Temperieren zumindest zweier Fahrzeugkomponenten (30, 31, 32, 33, 34, 38), von denen eine der Energiespeicher (30) des batterieelektrisch betriebenen Fahrzeugs ist und/oder sind der zumindest eine erste Kühlkreislauf (10), der zumindest eine zweite Kühlkreislauf (20) und ein Kältemittelkreislauf (50) zum Wärmeaustausch miteinander gekoppelt oder verbunden.

## Beschreibung

Die Erfindung betrifft ein Kühlsystem zum Kühlen von Fahrzeugkomponenten eines batterieelektrisch betriebenen Fahrzeugs, insbesondere eines Energiespeichers, wobei das Kühlsystem zumindest einen ersten Kühlkreislauf mit zumindest einem ersten Kühlmittel und einen zweiten Kühlkreislauf mit zumindest einem zweiten Kühlmittel umfasst, und wobei das zumindest eine zweite Kühlmittel zum Temperieren von Hochvolt-Fahrzeugkomponenten ausgebildet ist, sowie ein batterieelektrisch betriebenes Fahrzeug mit Fahrzeugkomponenten, insbesondere zumindest einem Energiespeicher, und zumindest einem Kühlsystem zum Temperieren der Fahrzeugkomponenten.

Bei batterieelektrisch betriebenen Fahrzeugen ist es erforderlich, den zumindest einen Energiespeicher, also deren Traktionsbatterie, regelmäßig zu laden, um eine Weiterfahrt zu ermöglichen. Gerade auf längeren Fahrtstrecken wird dabei ein schnelles Laden, also Schnellladen, der Traktionsbatterie bzw. des Energiespeichers bevorzugt, da anderenfalls die für das Laden des Energiespeichers erforderlichen Fahrtunterbrechungen bzw. Pausen und damit die Zeitverzögerung bei der Ankunft beim Ziel sehr groß wird. Aus diesem Grunde wurden Schnellladesysteme entwickelt, die es ermöglichen, innerhalb kurzer Zeit den Energiespeicher, also die Traktionsbatterie, eines batterieelektrisch betriebenen Fahrzeugs zu laden. Bei einem solchen Schnellladevorgang ergibt sich jedoch die Problematik, dass der Widerstand der Ladeleitung zu einem Spannungsabfall und einer entsprechenden Verlustleistung beim Laden führt. Die dabei entstehende Wärme muss für ein effizientes Laden abgeführt werden, so dass ein Kühlen erforderlich ist. Auch durch sogenannte On-Board-Ladegeräte, die fahrzeugseitig vorgesehen sind, entstehen weitere Verluste. Solche Ladegeräte dienen dazu, den von einer AC-Ladesäule ankommenden Wechselstrom für die Traktionsbatterie in Gleichstrom umzuwandeln. Eine weitere Problematik ergibt sich aufgrund des Übergangswiderstands an der Schnittstelle der Ladeleitung zu dem Fahrzeug, da bei häufigen Ladevorgängen, somit häufigem Ankoppeln und Abkoppeln der Ladeleitung am bzw. vom fahrzeugseitigen Ladeanschlussverbinder dessen nebeneinander positionierten Kontaktstifte Spiel bekommen, somit aus ihrer gewünschten Position gelangen, so dass Übergangswiderstände entstehen, die zu einem Temperaturanstieg führen. Wenn Ladeleitung bzw. deren Stecker und der fahrzeugseitige Ladeanschlussverbinder bzw. die Ladedose miteinander verbunden sind, sollten die Kontaktstifte ein geringes Spiel oder eine vergleichsweise enge Spielpassung im jeweiligen Gegenstück aufweisen, damit der Übergangswiderstand gering ist/bleibt. Bei Wärmeeinfluss verändert sich dieser Übergangswiderstand jedoch, was in geringem Umfang akzeptabel ist, außerhalb dieser Grenzen jedoch unerwünscht aufgrund des dann erhöhten Übergangswiderstandes. Es kann ferner ein erhöhter Verschleiß bzw. eine erhöhte Abnutzung der Kontaktstifte auftreten, was ebenfalls den Übergangswiderstand beeinflusst. Temperaturen von zumindest deutlich über 90 °C führen zu einer Wärmedehnung der Kontaktstifte und somit zu einem erhöhten Übergangswiderstand. Aufgrund der Wärmedehnung im Bereich des Ladeanschlussverbinders erweist es sich als sinnvoll, eine Kühleinrichtung vorzusehen, um eine Maximaltemperatur von 90 °C nicht zu überschreiten. Alternativ müsste der Ladevorgang gedrosselt werden, so dass dieser längere Zeit in Anspruch nimmt. Im Zusammenhang mit der Überwachung der Temperatur im Bereich eines fahrzeugseitigen Ladeanschlussverbinders bzw. Ladeanschlusses bzw. einer fahrzeugseitigen Ladedose mit in diesem bzw. dieser integrierten Kontaktstiften ist es bekannt, Temperatursensoren in bzw. am oder im Bereich des fahrzeugseitigen Anschlussverbinders vorzusehen, um rechtzeitig einen Ladevorgang zu drosseln und Beschädigungen bzw. eine unzulässige Beanspruchung des fahrzeugseitigen Ladeanschlussverbinders vermeiden zu können. Auch beim Abrufen besonders hoher Leistungen im Fahrbetrieb treten deutlich höhere Temperaturen auf, so dass auch dabei eine ausreichend hohe Kühlleistung für den Energiespeicher, somit die Traktionsbatterie des batterieelektrisch betriebenen Fahrzeugs, bereitgestellt werden sollte. Zur Einsparung von Kosten werden oftmals die Leitungsquerschnitte der elektrischen Leitungen eines batterieelektrischen Fahrzeugs reduziert, was bei diesen Leitungen ebenfalls zu einer Temperaturerhöhung führt, so dass auch hierbei eine ausreichende Kühlleistung bereitgestellt werden sollte, um Beschädigungen oder auch einen Ausfall des Antriebs des batterieelektrisch betriebenen Fahrzeugs zu vermeiden.

Aus der DE 10 2011 119 495 B4 ist ein Kraftfahrzeug mit einem Ladekabel zum Laden einer kraftfahrzeugseitigen Energiespeichereinheit für elektrische Energie bekannt, wobei das Ladekabel ein Anschlusselement zum Verbinden mit einem Anschluss einer externen Quelle oder mit einem fahrzeugseitigen Anschluss oder einer kraftfahrzeugseitigen Energiespeichereinheit aufweist. Eine Möglichkeit zum Kühlen ist bei der Anordnung gemäß diesem Stand der Technik nicht vorgesehen, so dass der Ladestrom begrenzt werden muss, was zu vergleichsweise höheren Ladezeiten führt.

Aus der DE 11 2012 003 099 B4 ist eine Fahrzeugladestation bekannt, die eine hochleistungsfähige Ladequelle zum Schnellladen einer elektrischen Batterie eines Elektrofahrzeugs, eine Kühlmittelquelle zum Bereitstellen eines elektrisch isolierenden Kühlmittels und einen Anschluss umfasst, der sowohl einen Abschnitt für die elektrische Speisung zum Zuführen der elektrischen Ladung als auch einen Anschluss für die Kühlmittelspeisung zum Zuführen eines Kühlmittels umfasst. Der Anschluss zum Laden der elektrischen Batterie zum Bereitstellen des elektrisch isolierenden flüssigen Kühlmittels kann von der Kühlmittelquelle über eine innerhalb des Elektrofahrzeugs angeordnete Kühlmittelleitung zum Kühlen der elektrischen Batterie während des Ladevorgangs mit einer Aufnahme des Elektrofahrzeugs verbunden werden. Es ist somit ein Kühlen der Batterie vorgesehen, wobei ein äußerer Kühlkreislauf an den Kühlkreislauf des Fahrzeugs angeschlossen wird. Nachteilig ist hierbei, dass das Schnellladesystem eine aufwendige Trennung zwischen Fluid und elektrischem Anschluss im Bereich des fahrzeugseitigen Ladeanschlussverbinders erforderlich macht, also der Schnittstelle zwischen der von der hochleistungsfähigen Ladequelle kommenden Leitung und dem fahrzeugseitigen Ladeanschlussverbinder erfolgen muss. Hierdurch ergibt sich ein Sicherheitsrisiko im Hinblick auf die Hochvoltleitung, die von der hochleistungsfähigen Ladequelle kommend mit dem fahrzeugseitigen Ladeanschlussverbinder verbunden werden muss, wobei die Kühlmittelleitungen sicher von den elektrischen Leitungen getrennt werden müssen. Dies ist einerseits aufwendig, andererseits auch teuer. Durch regelmäßiges Öffnen des ansonsten innerhalb des Fahrzeugs üblicherweise geschlossenen Systems der Kühlmittelleitungen ergeben sich weitere Probleme aufgrund von möglichen Leckagen, Verunreinigungen, Lufteinschlüssen und eines Verschleißes von Dichtelementen, die beim Koppeln und Entkoppeln, also Anschließen und Trennen der Ladeleitung und des fahrzeugseitigen Ladeanschlussverbinders auftreten können.

Aus der DE 10 2018 133 005 A1 ist ein Wärmesystem für ein Fahrzeug, nämlich für ein Elektro- oder Hybridfahrzeug, mit einem Elektrospeicher zur Energieversorgung eines Antriebs des Fahrzeugs und mit einem Hochvoltspeicherkreislauf zum Temperieren des Elektrospeichers sowie mit einem Luftpfad zur Förderung von Umgebungsluft bekannt, wobei der Hochvoltspeicherkreislauf zum Fördern eines dielektrischen Wärmemediums ausgebildet ist. Ferner ist der Elektrospeicher mit dem Hochvoltspeicherkreislauf verbunden und zur Immersionskühlung mittels des Wärmemediums ausgebildet, wobei der Elektrospeicher ein Gehäuse aufweist, welches zum Führen des Wärmemediums, und wobei der Elektrospeicher ein Gehäuse aufweist, welches zum Führen des Wärmemediums ausgebildet ist. An den Hochvoltspeicherkreislauf ist stromab des Elektrospeichers ein Wärmetauscher angeschlossen, der in dem Luftpfad angeordnet ist zum Wärmeaustausch zwischen den Wärmemedium und der Umgebungsluft. Der Hochvoltspeicherkreislauf kann beheizt und gekühlt werden, jeweils alternativ oder gleichzeitig, durch einen Wärmeübertrager in Form von Luft und/oder einen Chiller eines Kältemittelverdampfers. Als nachteilig erweist sich bei diesem Wärmesystem, dass ein Nutzen von anfallender Abwärme im Bereich des Wärmetauschers, der an dem Luftpfad angeschlossen ist, nicht erfolgt und ein Kühlen weiterer Fahrzeugkomponenten durch den Hochvoltspeicherkreislauf nicht möglich ist.

Aus der DE 10 2022 104 201 A1 ist ein Temperiersystem zum Temperieren einer Traktionsbatterie eines Kraftfahrzeugs mit einem Wärmeübertragermedium in einem Temperierkreislauf bekannt. Dieses umfasst ein Batteriegehäuse, das einen geschlossenen Innenraum mit zumindest einer Aufnahmeposition für eine Batteriezelle bildet, wobei ein unterer Bereich des Batteriegehäuses zur Aufnahme des Wärmeübertragermediums ausgeführt ist. Ferner umfasst es einen Wärmetauscher, der zur Wärmeabgabe von einem Wärmeträgermedium an die den Wärmetauscher umgebende Umgebung ausgebildet ist, einen Sammelbehälter zur Aufnahme des Wärmeübertragemediums, eine Pumpe zum Fördern des Wärmeüberträgermediums und ein Ausgleichvolumen, das in einem oberen Bereich des Sammelbehälters fluidverbunden ist. Das Wärmeträgermedium ist als dielektrisches Wärmetragermedium ausgebildet. Hierdurch kann insbesondere eine elektrische Isolierung zwischen einzelnen Batteriezellen gebildet werden, wenn das dielektrische Wärmetragermedium diese miteinander verbindet. Mittels dieses dielektrischen Wärmetragermediums wird jedoch gemäß in diesem Stand der Technik nur die Traktionsbatterie des Kraftfahrzeugs gekühlt, eine Kühlung weiterer Fahrzeugkomponenten ist nicht möglich.

Der vorliegenden Erfindung liegt daher die Aufgabe zugrunde, ein Kühlsystem zum Kühlen von Fahrzeugkomponenten, insbesondere eines Energiespeichers, eines batterieelektrisch betriebenen Fahrzeugs vorzusehen, wobei das Kühlsystem zumindest einen ersten Kühlkreislauf mit zumindest einem ersten Kühlmittel und einen zweiten Kreislauf mit zumindest einem zweiten Kühlmittel umfasst, und wobei das zumindest eine zweite Kühlmittel zum Temperieren von Hochvolt-Fahrzeugkomponenten ausgebildet ist, dahingehend fortzubilden, dass ein effektivere Kühlung bestimmter Fahrzeugkomponenten im Hinblick auf das Schnellladen eines Energiespeichers eines Fahrzeugs und im Hinblick auf den Abruf hoher Leistungen im Fahrbetrieb ermöglicht wird bzw. eine differenzierte Kühlung der Fahrzeugkomponenten mit Temperierbedarf im Hinblick auf das Schnellladen und den Abruf hoher Leistungen im Fahrbetrieb des batterieelektrisch betriebenen Fahrzeugs.

Die Aufgabe wird für ein Kühlsystem nach dem Oberbegriff des Anspruchs 1 dadurch gelöst, dass der zumindest eine zweite Kühlkreislauf zum Temperieren zumindest zweier Fahrzeugkomponenten dient, von denen eine ein Energiespeicher des batterieelektrisch betriebenen Fahrzeugs ist. Die Aufgabe wird für ein Kühlsystem nach dem Oberbegriff des Anspruchs 14 dadurch gelöst, dass der zumindest eine erste Kühlkreislauf, der zumindest eine zweite Kühlkreislauf und ein Kältemittelkreislauf zum Wärmeaustausch miteinander gekoppelt bzw. verbunden sind. Für ein batterieelektrisch betriebenes Fahrzeug mit Fahrzeugkomponenten, insbesondere zumindest einem Energiespeicher, und mit zumindest einem Kühlsystem zum Temperieren der Fahrzeugkomponenten wird die Aufgabe dadurch gelöst, dass das Kühlsystem ein solches Kühlsystem ist. Weiterbildungen der Erfindung sind in den abhängigen Ansprüchen definiert.

Dadurch werden ein Kühlsystem zum Kühlen von Fahrzeugkomponenten eines batterieelektrisch betriebenen Fahrzeugs sowie ein entsprechend mit einem solchen Kühlsystem versehenes Fahrzeug geschaffen, bei dem zum Ermöglichen einer effektiveren Kühlung von beim Schnellladen und beim Abruf hoher Leistungen im Fahrbetrieb des batterieelektrischen Fahrzeugs sich besonders erwärmender und daher möglichst zu kühlender Fahrzeugkomponenten durch das zweite Kühlmittel, das in dem zumindest einen zweiten Kühlkreislauf strömt, auch diese Fahrzeugkomponenten temperiert werden, somit nicht nur der Energiespeicher des batterieelektrisch betriebenen Fahrzeugs, sondern auch zumindest eine weitere Fahrzeugkomponente. Das zumindest eine zweite Kühlmittel, das im zweiten Kühlkreislauf strömt, ist dabei zum Temperieren von Hochvolt-Fahrzeugkomponenten ausgebildet. Insbesondere kann das zumindest eine zweite Kühlmittel daher ein dielektrisches oder isolierendes Kühlmittel sein.

Das Kühlsystem umfasst somit zumindest einen ersten Kühlkreislauf mit zumindest einem ersten Kühlmittel, insbesondere einem Wasser/Glycol-Gemisch, sowie zumindest einen zweiten Kühlkreislauf mit zumindest einem zweiten Kühlmittel, das zum Temperieren von Hochvolt-Fahrzeugkomponenten ausgebildet und insbesondere ein dielektrisches oder isolierendes Kühlmittel ist. Eine solche Hochvolt-Fahrzeugkomponente kann der zumindest eine Energiespeicher des Fahrzeugs, der über ein solches dielektrisches oder isolierendes Kühlmittel gekühlt wird, sein, wobei die Batteriezellen des Energiespeichers in unmittelbarem Kontakt mit dem Temperierfluid in Form des dielektrischen oder isolierenden zweiten Kühlmittels stehen. Zu unterscheiden ist die Kühlung von Batteriezellen über einen oder mehrere Wärmetauscher, die in Kontakt mit den Batteriezellen gebracht werden. Der oder die Wärmetauscher werden mit einem Kühlmittel beaufschlagt. Die Batteriezellen werden an der Stelle gekühlt, an der die Batteriezelle mit dem Wärmetauscher in Kontakt steht. Die Kühlung der nicht in Kontakt stehenden Bereiche der Batteriezelle erfolgt nur über Wärmeleitung. Ein unmittelbarer Kontakt mit dem Temperierfluid ("immersed cooling") bedeutet demgegenüber, dass ein Volumen im Energiespeicher mit dem Temperierfluid bzw. der Kühlflüssigkeit beaufschlagt wird/ist und die Batteriezellen in diesem Volumen angeordnet sind. Dabei werden Schutzmittel oder Isolationsmittel eingesetzt, um Batteriezelle(n) und Temperierfluid voneinander zu trennen, somit die Batteriezelle(n) von der Flüssigkeit in Form des Temperierfluids. Um die Kühleffizienz zu verbessern, kann/können die Batteriezelle(n) stärker von dem Temperierfluid, also der kühlenden Flüssigkeit bzw. Kühlflüssigkeit, umschlossen bzw. umspült werden.

Gerade die weiteren Fahrzeugkomponenten, die benachbart zu der oder den Hochvolt-Fahrzeugkomponenten des batterieelektrisch betriebenen Fahrzeugs angeordnet sind, werden ebenfalls in den zumindest einen zweiten Kühlkreislauf eingebunden und dementsprechend durch das zumindest eine zweite Kühlmittel temperiert, insbesondere gekühlt. Hierdurch wird ein effizientes Kühlen möglich. Gerade durch die räumliche Nähe zu der Hochvolt-Fahrzeugkomponente insbesondere in Form des zumindest einen Energiespeichers des batterieelektrisch betriebenen Fahrzeugs eignet sich deren Einbinden in den zumindest einen zweiten Kreislauf des Kühlsystems besonders. Außer dem zumindest einen Energiespeicher wird somit zumindest eine weitere Fahrzeugkomponente durch das zumindest eine zweite Kühlmittel temperiert bzw. kann durch dieses temperiert werden. Weitere Fahrzeugkomponenten können z.B. eine Ladeleitung zum Laden des Energiespeichers, die sich beim Schnellladen eines Energiespeichers eines batterieelektrisch betriebenen Fahrzeugs besonders erwärmt, und eine sich zwischen Energiespeicher und Elektromotor des batterieelektrisch betriebenen Fahrzeugs streckende Motorleitung, die beim Abrufen hoher Leistungen im Fahrbetrieb des batterieelektrisch betriebenen Fahrzeugs sich besonders erwärmt, sein. Sowohl die Ladeleitung als auch die Motorleitung als weitere Fahrzeugkomponenten können daher vorteilhaft ebenfalls durch das zumindest eine zweite Kühlmittel gekühlt werden. Ebenfalls können ein endseitig an der Ladeleitung angeordneter Ladeanschlussverbinder ebenso wie ein Charger Fahrzeugkomponenten sein, die in den zweiten Kühlkreislauf eingegliedert sind und insbesondere über das zumindest eine zweite Kühlmittel gekühlt bzw. temperiert werden können.

Der zumindest eine zweite Kühlkreislauf besteht weiter vorteilhaft aus zumindest zwei Teilkreisläufen. Über diese können zumindest zwei Fahrzeugkomponenten getrennt voneinander geeignet temperiert werden. Die zumindest zwei Teilkreisläufe des zweiten Kühlkreislaufs können daher weiter vorteilhaft unabhängig voneinander betrieben werden. Im Hinblick auf die unterschiedlichen zu kühlenden Fahrzeugkomponenten, z.B. in Form des Energiespeichers bzw. der Traktionsbatterie einerseits und der Ladeleitung andererseits, die in zumindest zwei Teilkreisläufen des zumindest einen zweiten Kühlkreislaufs angeordnet sind, können ferner völlig unterschiedliche Volumenströme für deren jeweiliges geeignetes Kühlen sinnvoll oder erforderlich sein und vorteilhaft über die zumindest zwei Teilkreisläufe zur Verfügung gestellt werden.

Weiter vorteilhaft kann beispielsweise zumindest ein Thermomanagementmodul vorgesehen sein zum Trennen zumindest zweier Teilkreisläufe zum getrennten Temperieren zumindest zweier Fahrzeugkomponenten mit jeweils geeigneten Volumenströmen an Temperierfluid, wobei das zumindest eine Thermomanagementmodul mit Vor- und Rückläufen der zumindest zwei Teilkreisläufe verbindbar oder verbunden ist. Über ein solches Thermomanagementmodul ist es somit möglich, die einzelnen Teilkreisläufe insbesondere des zumindest einen zweiten Kühlkreislaufs voneinander zu trennen, um ein getrenntes und somit individuell angepasstes Temperieren der an die Teilkreisläufe angeschlossenen zu temperierenden Fahrzeugkomponenten zu ermöglichen.

Weiter vorteilhaft kann auch der zumindest eine erste Kühlkreislauf aus zumindest zwei Teilkreisläufen bestehen, die unabhängig voneinander betrieben werden können. Insbesondere bestehen sowohl der zumindest eine erste Kühlkreislauf als auch der zumindest eine zweite Kühlkreislauf jeweils aus zumindest zwei Teilkreisläufen, die unabhängig voneinander betrieben werden können, somit die Teilkreisläufe des ersten Kühlkreislaufs und die Teilkreisläufe des zweiten Kühlkreislaufs. Zumindest ein Teilkreislauf des zumindest einen zweiten Kühlkreislaufs kann den zumindest einen Energiespeicher, und einer einen Charger, zumindest eine Ladeleitungskühleinrichtung zur Ladeleitungskühlung und zumindest eine Ladeanschlussverbinder-Kühleinrichtung zum Kühlen eines Ladeanschlussverbinders umfassen, wobei diese beiden Teilkreisläufe parallel geschaltet und eigenständig betrieben werden können. Insbesondere ist es bei einem Schnellladen des Energiespeichers des batterieelektrisch betriebenen Fahrzeugs ausreichend, wenn der zumindest eine zweite Kühlkreislauf zum Kühlen der vorstehend genannten Fahrzeugkomponenten des Energiespeichers, somit der Traktionsbatterie des Fahrzeugs, des Chargers, der Ladeleitungskühleinrichtung und der Ladeanschlussverbinder-Kühleinrichtung betrieben wird. Insbesondere kann eine Parallelschaltung der zu temperierenden Fahrzeugkomponenten vorgesehen werden, z.B. des Energiespeichers, somit der Traktionsbatterie, des batterieelektrisch betriebenen Fahrzeugs, und des Chargers, der Ladeleitung und des Ladeanschlussverbinders. Die zu temperierenden Fahrzeugkomponenten können jeweils weiter vorteilhaft temperaturüberwacht sein oder werden. Der Energiespeicher des batterieelektrisch betriebenen Fahrzeugs kann somit in einem Teilkreislauf des zweiten Kühlkreislaufs angeordnet sein, während Charger, Ladeleitung und Ladeanschlussverbinder insbesondere zusammen in einem weiteren Teilkreislauf des zweiten Kühlkreislaufs angeordnet sind.

Durch das Vorsehen einer jeweiligen Temperaturüberwachung, somit insbesondere das Vorsehen zumindest eines Temperatursensors im Bereich der einzelnen sich besonders beim Schnellladen bzw. im Fahrbetrieb des Fahrzeugs erhitzenden Fahrzeugkomponenten kann deren aktuelle Temperatur überwacht und die Fahrzeugkomponenten geeignet gekühlt bzw. die entsprechenden Fahrzeugkomponenten geeignet temperiert werden. Insbesondere kann zumindest eine Steuerungs- und/oder Regelungseinheit, auch als ECU bezeichnet, zum Steuern und/oder Regeln des zumindest einen zweiten Kühlkreislaufs in Verbindung mit dem zumindest einen Temperatursensor im Bereich der jeweiligen Fahrzeugkomponenten, die temperiert werden sollen, vorgesehen sein. Die zumindest eine Steuerungs- und/oder Regelungseinheit überwacht durch Abfragen der von dem zumindest einen Temperatursensor ermittelten Temperaturwerte die Temperatur der zu temperierenden Fahrzeugkomponenten und regelt Vorlauftemperaturen und/oder den zumindest einen Kühlwassermassenstrom geeignet. Es kann für den zweiten Kühlkreislauf eine eigenständige Steuerungs- und/oder Regelungseinheit zu dessen Steuerung vorgesehen werden, die über die Temperatursensoren der zu temperierenden Fahrzeugkomponenten deren jeweils aktuelle Temperatur überwacht und entsprechend die Vorlauftemperaturen und/oder den jeweiligen Massenstrom an zweitem Kühlmittel entsprechend geeignet regelt.

Weiter vorteilhaft enthält der zumindest eine zweite Kühlkreislauf zumindest eine Wärmequelle und zumindest eine Wärmesenke. Alternativ kann es auch ausreichend sein, dass der zumindest eine zweite Kühlkreislauf nur eine Wärmesenke umfasst, wenn die zu temperierenden Fahrzeugkomponenten ausreichend gut isoliert sind oder eine Wärmequelle direkt im zumindest einen Energiespeicher, also der Traktionsbatterie des batterieelektrisch betriebenen Fahrzeugs, und nicht im Kühlsystem außerhalb des Energiespeichers angeordnet ist. Das Isolieren der zu temperierenden Fahrzeugkomponenten kann dazu beitragen, dass eine Wärmezufuhr nicht erforderlich wird/ist oder sich die zu temperierenden Fahrzeugkomponenten durch eine ausreichende Menge an selbst produzierter Wärme erwärmen. Bei Vorsehen der zumindest einen Wärmequelle direkt in einem Energiespeicher kann z.B. ein elektrisches Heizsystem dort vorgesehen werden, das in der Nähe der Batteriezellen des Energiespeichers angeordnet wird/ist und im Winterbetrieb vor dem Starten des Fahrzeugs Wärme bereitstellen kann. Weiter vorteilhaft kann die Wärmesenke Teil des ersten Kühlkreislaufs und des zweiten Kühlkreislaufs sein, wobei im ersten Kühlkreislauf diese dann als Wärmequelle wirkt. Über eine solche Wärmesenke bzw. Wärmequelle ist somit ein geeignetes Koppeln des ersten Kühlkreislaufs und des zweiten Kühlkreislaufs möglich, um eine effektivere Kühlung bestimmter zu temperierender Fahrzeugkomponenten beim Schnellladen, auch Ultra Fast Charging genannt, und beim Abruf hoher Leistungen im Fahrbetrieb des batterieelektrisch betriebenen Fahrzeugs zu ermöglichen.

Weiter vorteilhaft kann zumindest ein Wärmeübertrager einer Ladeleitung zugeordnet und zumindest teilweise entlang von dieser angeordnet sein oder sich erstrecken. Der Wärmeübertrager kann sich somit entlang von deren Längserstreckung vollständig oder teilweise über deren Längserstreckung erstrecken. Beispielsweise kann zumindest eine Kühlmittelleitung, insbesondere ein Kühlmittelschlauch, innen durch eine solche Ladeleitung des batterieelektrisch betriebenen Fahrzeugs hindurchgeführt sein oder werden insbesondere die Ladeleitung an der Kühlmittelleitung, insbesondere am Kühlmittelschlauch, verseilt sein. Dadurch, dass die zumindest eine Kühlmittelleitung zum Durchleiten des zumindest einen zweiten Kühlmittels innen durch die Ladeleitung geführt wird, ist ein besonders effizientes Kühlen der Ladeleitung möglich. Entsprechendes gilt auch für ein Verseilen der Ladeleitung um die zumindest eine Kühlmittelleitung, insbesondere zumindest einen Kühlmittelschlauch.

Ferner kann zumindest ein Sensor, insbesondere Temperatursensor, an der Ladeleitung zum Erfassen der Temperatur von dieser angeordnet sein. Beispielsweise eignet sich ein solches Anordnen eines Temperatursensors im Bereich eines Ladeleitungsanschlussverbinders, insbesondere Anschlusssteckers, der Ladeleitung. Durch das Koppeln bzw. Verbinden des zumindest einen ersten Kühlkreislaufs, des zumindest einen zweiten Kühlkreislaufs und des Kältemittelkreislaufs zum gegenseitigen Wärmeaustausch ist ein besonders effizientes differenziertes Kühlen der einzelnen Fahrzeugkomponenten, die Temperierbedarf aufweisen, möglich, sowohl beim Schnellladen als auch beim Abruf hoher Leistungen im Fahrbetrieb des batterieelektrisch betriebenen Fahrzeugs. Die drei Kreisläufe können hierbei wahlweise miteinander zum Wärmeaustausch gekoppelt werden, somit die in einem Kreislauf anstehende überschüssige Wärme in einem anderen Kreislauf genutzt werden. Vorteilhaft kann hierbei der zumindest eine erste Kühlkreislauf zumindest eine Wärmesenke, vorteilhaft über einen Schnittstellenwärmeübertrager, für den zumindest einen zweiten Kühlkreislauf bereitstellen. Ferner ist es möglich, dass der zumindest eine erste Kühlkreislauf zumindest eine Wärmequelle, vorteilhaft über einen Schnittstellenwärmeübertrager, für den zumindest einen zweiten Kühlkreislauf bereitstellt. Ebenfalls ist es möglich, dass der zumindest eine Kältemittelkreislauf zumindest eine Wärmesenke, vorteilhaft über einen Schnittstellenwärmeübertrager, für den zumindest einen zweiten Kühlkreislauf bereitstellt. Somit ist es möglich, dass über einen jeweiligen Schnittstellenwärmeübertrager sowohl eine Wärmezufuhr als auch eine Wärmeabfuhr bezüglich des zweiten Kühlmittelkreislaufs durch den ersten Kühlkreislauf und/oder den Kältemittelkreislauf ermöglicht wird. Bevorzugt kann der Kältemittelkreislauf zumindest eine Wärmesenke, vorteilhaft über einen Schnittstellenwärmeübertrager, für den zweiten Kühlkreislauf bereitstellen und der erste Kühlkreislauf zumindest eine Wärmequelle, vorteilhaft über einen Schnittstellenwärmeübertrager, für den zweiten Kühlkreislauf bereitstellen. Über den zumindest einen Kältemittelkreislauf können niedrigere Temperaturen bezüglich des zweiten Kühlkreislaufs über einen Schnittstellenwärmeübertrager zur Verfügung gestellt werden als dies mit dem ersten Kühlkreislauf möglich ist.

Unter einem Kältekreislauf wird ein Kreislauf verstanden, in dem ein Kältemittel strömt bzw. strömen kann. Ein Kältemittel ist dadurch gekennzeichnet, dass Verdampfung und/oder Kondensation des Stoffes/Kältemittels genutzt wird/werden, wobei die dabei genutzte Verdampfungsenthalpie besonders effizient für eine Wärmeübertragung ist. Im Kältekreislaufsystem wird üblicherweise in zwei Drucklagen gearbeitet, was durch Kompression und Expansion gewährleistet wird. Demgegenüber weist ein Kühlmittelkreislauf ein Kühlmittel auf, das keinen Phasenwechsel durchläuft. Der Druck im Kühlmittelsystem ist vergleichsweise homogen, lediglich Druckverluste im Kühlmittelsystem können (geringe) Druckunterschiede bewirken.

Weiter vorteilhaft kann zumindest ein Thermomanagementmodul vorgesehen sein, das vom ersten Kühlmittel und/oder zweiten Kühlmittel durchströmbar ist, das somit sowohl in den ersten Kühlkreislauf eingebunden ist als auch in den zweiten Kühlkreislauf. Es kann somit einerseits ein jeweiliges Thermomanagementmodul für den ersten und den zweiten Kühlkreislauf vorgesehen sein, andererseits ein einziges Thermomanagementmodul, das sowohl zum Trennen von Teilkreisläufen des ersten Kühlkreislaufs als auch des zweiten Kühlkreislaufs ausgebildet ist. Zum Ansteuern der Thermomanagementmodule oder des einen Thermomanagementmoduls können ein oder mehrere Steuerungs- und/oder Regelungseinheiten vorgesehen sein, sogenannte ECUs.

Zur näheren Erläuterung der Erfindung werden im Folgenden Ausführungsbeispiele von dieser näher anhand der Zeichnungen beschrieben. Diese zeigen in:

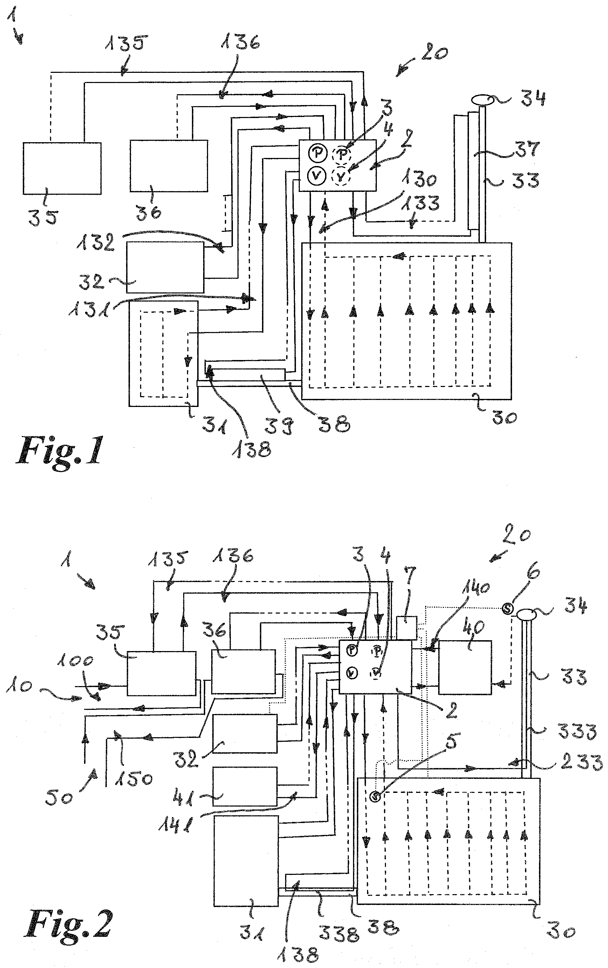

- Figur 1: eine Prinzipskizze einer ersten Ausführungsform eines erfindungsgemäßen Kühlsystems zum Kühlen von Fahrzeugkomponenten als Teil eines Fahrzeug-Thermomanagementsystems eines batterieelektrisch betriebenen Fahrzeugs, wobei ein erfindungsgemäßer Kühlkreislauf, der von einem erfindungsgemäßen zweiten Kühlmittel, insbesondere einem dielektrischen Kühlmittel, durchströmt wird, skizziert ist,
- Figur 2: eine Prinzipskizze einer zweiten Ausführungsform eines erfindungsgemäßen Kühlsystems zum Kühlen von Fahrzeugkomponenten eines batterieelektrisch betriebenen Fahrzeugs, wobei ein erfindungsgemäßer Kühlkreislauf, der von einem erfindungsgemäßen zweiten Kühlmittel, insbesondere einem dielektrischen Kühlmittel, durchströmt wird, skizziert ist,

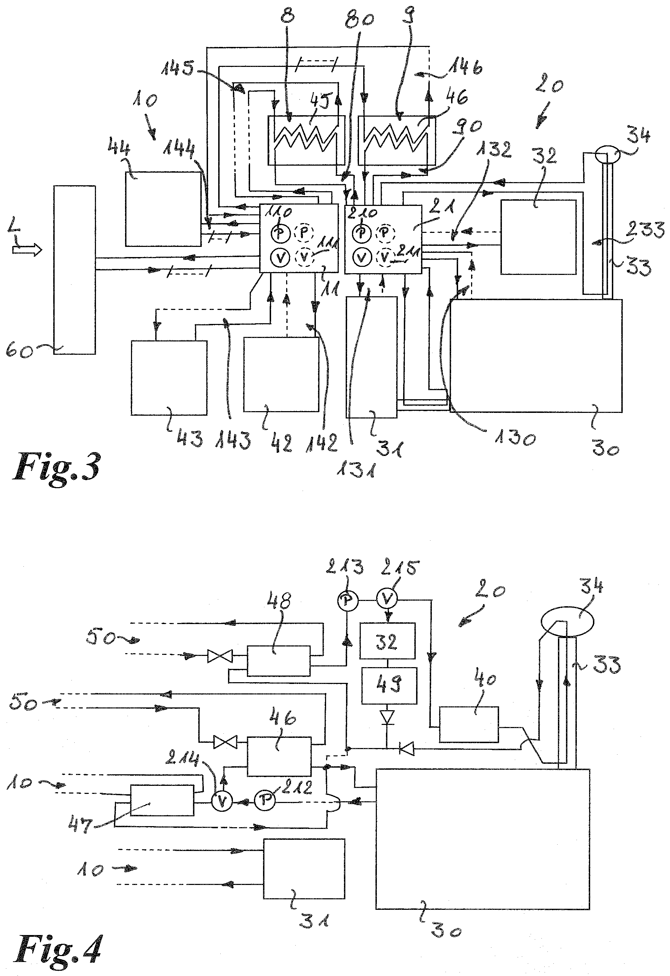

- Figur 3: eine Prinzipskizze einer dritten Ausführungsform eines erfindungsgemäßen Kühlsystems zum Kühlen von Fahrzeugkomponenten eines batterieelektrisch betriebenen Fahrzeugs, wobei ein erster Kühlkreislauf, der von einem ersten Kühlmittel durchströmt wird, und ein zweiter Kühlkreislauf, der von einem zweiten Kühlmittel durchströmt wird, skizziert sind unter Integration von Schnittstellenwärmeübertragern zwischen den beiden Kühlkreisläufen sowie eines jeweiligen Thermomanagementmoduls eines jeden der beiden Kühlkreisläufe,
- Figur 4: eine Prinzipskizze einer vierten Ausführungsform eines erfindungsgemäßen Kühlsystems zum Kühlen von Fahrzeugkomponenten eines batterieelektrisch betriebenen Fahrzeugs, wobei ein erfindungsgemäßer erster Kühlkreislauf, ein erfindungsgemäßer zweiter Kühlkreislauf und ein Kältemittelkreislauf und der Kältemittelkreislauf über Wärmesenken und der erste Kühlkreislauf über eine Wärmequelle mit dem zweiten Kühlkreislauf verbunden sind,

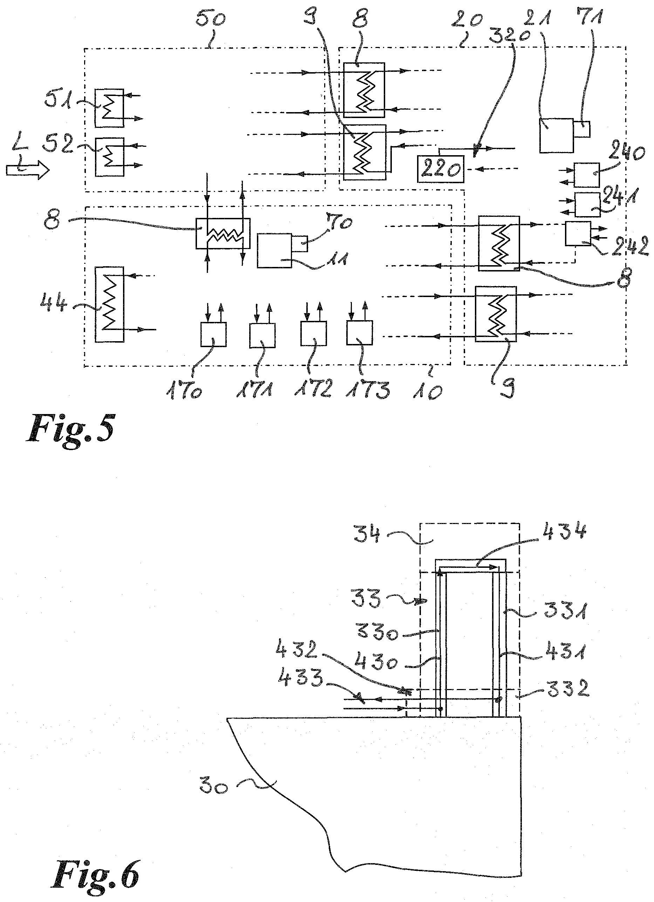

- Figur 5: eine Prinzipskizze einer fünften Ausführungsform eines erfindungsgemäßen Kühlsystems zum Kühlen von Fahrzeugkomponenten eines batterieelektrisch betriebenen Fahrzeugs, wobei ein erster Kühlkreislauf, der von einem ersten Kühlmittel, z.B. in Form eines Wasser/Glykol-Gemischs, durchströmt wird, ein zweiter Kühlkreislauf, der von einem zweiten, z.B. dielektrischen, Kühlmittel durchströmt wird, und ein Kältemittelkreislauf, der von einem Kältemittel durchströmt wird, über Schnittstellenwärmeübertrager miteinander verbunden sind, und
- Figur 6: eine Prinzipskizze eines Ausschnitts eines erfindungsgemäßen zweiten Kühlmittelkreislaufs, bei dem in einem Teilkreislauf von diesem ein Energiespeicher und eine an diesem angeschlossene Ladeleitung mit endseitigem Ladeanschlussverbinder/Ladedose angeordnet sind, wobei die Ladeleitung zwei mit dem zweiten Kühlmittel innendurchströmte Ladeleitungsstränge umfasst.

Figur 1 zeigt eine Prinzipskizze eines Teilausschnitts eines von einem Kühlmittel, insbesondere einem dielektrischen Kühlmittel, durchströmten Kühlkreislaufs 20 eines Kühlsystems 1. Der Kühlkreislauf 20 wird von einem Kühlmittel, wie einem dielektrischen Kühlmittel, durchströmt, das insbesondere zum Kühlen bzw. zum Temperieren von Fahrzeugkomponenten dient, die in Teilkreisläufen des Kühlkreislaufs 20 angeordnet sind. Die Fahrzeugkomponenten eines in Figur 1 nicht gezeigten batterieelektrisch betriebenen Fahrzeugs sind hier z.B. ein Energiespeicher 30 bzw. eine Traktionsbatterie, ein Elektromotor 31, Leistungselektronik 32, eine Ladeleitung 33 mit einem endseitig daran angeordneten Ladeanschlussverbinder 34 des batterieelektrisch betriebenen Fahrzeugs. Ferner umfasst der Kühlkreislauf 20 eine Wärmequelle 35 und eine Wärmesenke 36, wobei die Wärmequelle 35 beispielsweise ein Heizgerät oder ein Wärmeübertrager zu einem ersten Kühlkreislauf 10 des Kühlsystem 1 sein kann, wobei der erste Kühlkreislauf 10, der in Figur 2 gezeigt ist, von einem ersten Kältemittel, z.B. in Form eines Wasser/Glykol-Gemischs, durchströmt werden kann. Der Kühlkreislauf 20 wird somit als zweiter Kühlkreislauf bezeichnet, das in ihm strömende Kühlmittel dementsprechend als das zweite Kühlmittel, das z.B. ein dielektrisches Kühlmittel ist. Die Wärmesenke 36 kann beispielsweise durch eine Klimaanlage mit Chiller bereitgestellt werden bzw. durch einen Wärmeübertrager zu einem in Figur 3 gezeigten Kältemittelkreislauf 50. Die Wärmequelle 35 ist bevorzugt ein Wärmetauscher des ersten Kühlkreislaufs 10, kann jedoch auch ein Wärmetauscher des Kältemittelkreislaufs 50 sein, somit durch einen Kondensator bzw. Gaskühler bereitgestellt werden. Ferner kann die Wärmequelle ein Wärmeerzeuger sein, der beispielsweise elektrisch Wärme erzeugt bzw. als PTC-Heizer ausgebildet ist. Die Wärmesenke 36 kann bevorzugt ein Chiller bzw. Verdampfer des Kältemittelkreislaufs 50 sein oder ein Wärmetauscher des ersten Kühlkreislaufs 10.

Zum Kühlen sowohl des Elektromotors 31 als auch des Energiespeichers 30 werden beide mit dem zweiten Kühlmittel, wie einem dielektrischen Kühlmittel, des zweiten Kühlkreislaufs 20 umströmt, wobei zu diesem Zweck die in Figur 1 gestrichelt gezeigten Leitungen im jeweiligen Gehäuse des Elektromotors 31 bzw. des Energiespeichers 30 angeordnet sind. Die zum Umspülen einerseits des Elektromotors 31, andererseits des Energiespeichers 30 vorgesehenen Leitungen sind jeweils Teil eines Teilkreislaufs 130 bzw. 131 des zweiten Kühlkreislaufs 20 des Kühlsystems 1.

Auch die Leistungselektronik 32 kann temperiert, insbesondere gekühlt, werden über das dielektrische Kühlmittel, wobei die Leistungselektronik 32 entsprechend in einem Teilkreislauf 132 des zweiten Kühlkreislaufs 20 des Kühlsystems 1 angeordnet ist. Auch der Ladeanschlussverbinder 34 kann durch das zweite Kühlmittel, wie einem dielektrischen Kühlmittel, des zweiten Kühlkreislaufs 20 temperiert werden, wobei ein Wärmetauscher 37 der Ladeleitung 33 zugeordnet und entweder vollständig entlang von deren Länge oder nur über einen Teil von deren Längserstreckung angeordnet ist, um ein entsprechendes Temperieren, insbesondere Kühlen, der Ladeleitung 33 zu ermöglichen. Der Wärmetauscher 37 der Ladeleitung 33 ist in einen Teilkreislauf 133 des zweiten Kühlkreislaufs 20 eingebunden, wie ebenfalls Figur 1 entnommen werden kann.

Die Wärmequelle 35 ist Teil eines Teilkreislaufs 135 des zweiten Kühlkreislaufs 20 des Kühlsystem 1, während die Wärmesenke 36 Teil eines Teilkreislaufs 136 des zweiten Kühlkreislaufs 20 des Kühlsystems 1 ist.

Zwischen dem Elektromotor 31 und dem Energiespeicher 30 erstreckt sich eine Motorleitung 38. Diese ist eine elektrische Leitung, die sich gerade im Fahrbetrieb des batterieelektrisch betriebenen Fahrzeugs bei Abrufen hoher Leistung ebenfalls stark erwärmen kann. Dementsprechend erstreckt sich entlang eines Teils oder vollständig entlang der Motorleitung 38 ein Wärmetauscher 39. Um diesen geeignet temperieren zu können, wird auch dieser vom zweiten Kühlmittel, wie einem dielektrischen Kühlmittel, das hier in einem Teilkreislauf 138 des zweiten Kühlkreislaufs 20 des Kühlsystems 1 strömt, durchströmt und entsprechend temperiert.

Alle Teilkreisläufe 130, 131, 132, 133, 135, 136, 138 werden über ein Thermomanagementmodul 2 geführt. Dieses umfasst eine Anzahl von Pumpen 3 und Ventilen 4. Die Ventile des Thermomanagementmoduls 2 dienen der Massenstromregelung zum Regeln der Massenströme an dielektrischem Kühlmittel als Temperiermedium zum Temperieren der einzelnen Fahrzeugkomponenten, die in den Teilkreisläufen des zweiten Kühlkreislaufs 20 angeordnet sind, die Pumpen 3 der Förderung des dielektrischen Kühlmittels innerhalb der einzelnen Medienleitungen des zweiten Kühlkreislaufs 20 bzw. in dessen Teilkreisläufen. Durch die Pumpen 3 und Ventile 4 des Thermomanagementmoduls 2 ist ein Temperieren der Fahrzeugkomponenten völlig unabhängig voneinander und auch mit unterschiedlichen Volumenströmen an zweitem Kühlmittel möglich. Beispielsweise kann lediglich ein Kühlen der Ladeleitung 33 und der Motorleitung 38 erfolgen über deren jeweiligen Wärmetauscher 37 bzw. 39. Soll während des Ladevorgangs des Energiespeichers 30, also der Traktionsbatterie eines batterieelektrisch betriebenen Fahrzeugs, ein Kühlen erfolgen, wird entsprechend temperiertes zweites, insbesondere dielektrisches, Kühlmittel durch den Teilkreislauf 133 der Ladeleitung 33 bzw. von deren Wärmetauscher 37, den Teilkreislauf 130 des Energiespeichers 30 und eines Chargers, der in Figur 1 nicht gezeigt ist, sowie der Wärmesenke 36 bzw. von deren Teilkreislauf 136 gefördert.

Im Unterschied zur Figur 1 ist der Charger 40 in Figur 2 gezeigt. Dieser ist über einen Teilkreislauf 140 mit dem Thermomanagementmodul 2 verbunden. Ferner ist im Unterschied zu der Ausführungsform nach Figur 1 ein Durchströmen der Ladeleitung 33 bzw. der Motorleitung 38 mit dem zweiten, z.B. dielektrischen, Kühlmittel vorgesehen, so dass der jeweilige Wärmetauscher 37 bzw. 39 aus Figur 1 in der Ausführungsform nach Figur 2 entfällt. Sowohl die Ladeleitung 33 als auch die Motorleitung 38 werden somit so ausgebildet, dass die jeweilige Kühlmittelleitung innen durch die Ladeleitung 33 bzw. innen durch die Motorleitung 38 hindurchgeführt wird. Ein Teilkreislauf 233 des zweiten Kühlkreislaufs 20 umfasst somit diese Kühlmittelleitung 333, wobei der Teilkreislauf 233 auch über den Ladeanschlussverbinder 34 geführt ist und über den Charger 40 zurück zum Thermomanagementmodul 2. Die Kühlmittelleitung 338, die sich durch die Motorleitung 38 hindurch in deren Innerem erstreckt, um die Motorleitung 38 kühlen bzw. geeignet temperieren zu können, ist Teil des Teilkreislaufs 138. Nicht nur der Energiespeicher 30, also die Traktionsbatterie des batterieelektrisch betriebenen Fahrzeugs, sondern auch die Motorleitung 38 sind jeweilige Hochvolt-Fahrzeugkomponenten des Fahrzeugs, so dass ein Temperieren über das zweite, z.B. dielektrische, Kühlmittel, das in dem zweiten Kühlkreislauf 20 strömt, ein sicheres Temperieren ermöglicht. Der Teilkreislauf 233 von Charger 40, Ladeleitung 33 und Ladeanschlussverbinder 34 ebenso wie der Teilkreislauf 130 des Energiespeichers 30 sind eigenständig betreibbar. Dementsprechend reicht ein Temperieren, insbesondere Kühlen, des dielektrischen Kühlmittels und somit des zweiten Kühlkreislaufs 20 für ein Kühlen während des Schnellladens des Energiespeichers 30 aus.

Beim Laden des Energiespeichers 30 kann ein AC-Laden, also ein Laden mit Wechselstrom, oder ein DC-Laden, also ein Laden mit Gleichstrom, vorgesehen werden. Beim Schnellladen bzw. sogenannten Ultra Fast Charging wird üblicherweise ein DC-Laden genutzt, also ein Laden mit Gleichstrom derzeit mit einer Leistung über 22kW. Der Energiespeicher 30 ebenso wie auch andere Akkus speichern Gleichstrom. AC-Ladestationen geben Wechselstrom ab, der im Fahrzeug zu Gleichstrom umgewandelt werden muss, während DC-Ladestationen Wechselstrom durch einen Gleichrichter selbst in Gleichstrom umwandeln und diesen dann an den Energiespeicher 30 des Fahrzeugs abgeben. DC-Ladestationen haben eine weitaus höhere Leistung als die Komponenten des Fahrzeugs, so dass durch DC-Ladestationen ein deutlich schnelleres Laden des Energiespeichers 30 des Fahrzeugs ermöglicht wird. DC-Ladestationen ermöglichen ein direktes Laden, da der Energiespeicher 30 mit Gleichstrom betrieben wird und das DC-Laden, also das Laden des Energiespeichers 30 mit Gleichstrom, eine direkte Energieübertragung ohne Umwandlungsverluste im Fahrzeug ermöglicht, anders als beim AC-Laden.

Die Ladeleitung 33 und auch die Motorleitung 38 können nicht nur, wie in Figur 2 gezeigt, in Form von von dem zweiten Kühlmittel durchströmten Leitungen ausgebildet werden, sondern auch in Form zweier Leitungsstränge, wobei vorteilhaft jeder dieser Leitungsstränge gekühlt werden kann bzw. gekühlt wird. Eine solche Ausführungsvariante ist beispielhaft für die Ladeleitung 33 in Figur 6 gezeigt. Sie eignet sich besonders für ein Schnellladen. Die Ladeleitung 33 umfasst einen ersten Ladeleitungsstrang 330 und einen zweiten Ladeleitungsstrang 331. Beide Ladeleitungsstränge 330, 331 sind einerseits mit dem Ladeanschlussverbinder 34 bzw. der Ladedose verbunden und andererseits mit dem Energiespeicher 30 bzw. der Traktionsbatterie. Beide Ladeleitungsstränge 330, 331 weisen eine jeweilige Kühlmittelleitung 430, 431 auf, die innen durch den jeweiligen Ladeleitungsstrang 330, 331 der Ladeleitung 33 hindurchgeführt ist, somit in die beiden Ladeleitungssträngen 330, 331 integriert ist. Ein Teilkreislauf 433 des zweiten Kühlkreislaufs 20 umfasst diese Kühlmittelleitungen 430, 431. Der Teilkreislauf 433 ist auch über den Ladeanschlussverbinder 34 über eine dort angeordnete Kühlmittelleitung 434 geführt. Diese dient als Wärmetauscher für den Ladeanschlussverbinder 34, somit die sog. Ladedose. Gekühlt bzw. vom zweiten Kühlmittel durchströmt werden die Kühlmittelleitungen 430 431 der beiden Ladeleitungsstränge 330, 331 und die Kühlmittelleitung 434 in Reihe, somit zuerst die Kühlmittelleitung 430 des ersten Ladeleitungsstrangs 330, danach die Kühlmittelleitung 434 des Ladeanschlussverbinders 34 bzw. der Ladedose und zuletzt die Kühlmittelleitung 431 des zweiten Ladeleitungsstrangs 331. Dies ist auch durch die Pfeile in den Kühlmittelleitungen 430, 431, 434 in Figur 6 angedeutet.

Ein elektrischer Anschlussverbinder bzw. Elektrostecker 332 zum elektrischen Verbinden der Ladeleitungsstränge 330, 331 mit dem Energiespeicher bzw. der Traktionsbatterie 30 kann zusätzlich zumindest einen fluidischen Verbinder 432, wie einen Steckverbinder, umfassen, der mit dem Fluidsystem des zweiten Kühlkreislaufs 20 verbunden werden kann bzw. wird. Dies ist in Figur 6 ebenfalls angedeutet. Im Bereich des Elektrosteckers 332 werden die beiden Kühlmittelleitungen 430, 431 somit wieder von den beiden Ladeleitungssträngen 330, 331 separiert und beide Kühlmittelleitungen 430, 431 können in dem fluidischen Steckverbinder 432 enden, der an das Fluidsystem des zweiten Kühlkreislaufs 20 angeschlossen werden kann.

Um die Temperatur im Bereich des Energiespeichers 30 ermitteln zu können, ist in Figur 2 dort ein erster Temperatursensor 5 angeordnet, um die Temperatur im Bereich des Ladeanschlussverbinders 34 ermitteln zu können, ist dort ein zweiter Temperatursensor 6 angeordnet. Die am ersten Temperatursensor 5 und am zweiten Temperatursensor 6 ermittelten Temperaturwerte werden einer Steuerungs- und/oder Regelungseinheit bzw. ECU 7 zugeführt, die im Bereich des Thermomanagementmoduls 2 angeordnet ist. Es können auch noch weitere Temperatursensoren beispielsweise im Bereich der Leistungselektronik 32 angeordnet werden, über die dort die Temperatur ermittelt und der Steuerungs- und/oder Regelungseinheit/ECU 7 zugeführt werden kann. Die Steuerungs- und/oder Regelungseinheit beeinflusst die Pumpen 3 und Ventile 4 des Thermomanagementmoduls 2, um die Massenströme an dielektrischem Kühlmittel geeignet in die einzelnen Teilkreisläufe des zweiten Kühlkreislaufs 20, gefördert durch die Pumpen 3, strömen lassen zu können. Hierdurch ist ein effizientes Kühlen der jeweils zu temperierenden Fahrzeugkomponenten des batterieelektrisch betriebenen Fahrzeugs sowohl beim Schnellladen als auch beim Abruf von hohen Leistungen im Fahrbetrieb des batterieelektrisch betriebenen Fahrzeugs möglich.

Im Unterschied zur Figur 1 sind sowohl bei der Wärmequelle 35 als auch bei der Wärmesenke 36 jeweils deren Eingliederung in einerseits den ersten Kühlkreislauf 10, andererseits den Kältemittelkreislauf 50 über entsprechende Teilkreisläufe 100 bzw. 150 angedeutet. Anstelle des Einbindens der Wärmequelle 35 in den ersten Kühlkreislauf 10, kann die Wärmequelle 35 auch in den Kältemittelkreislauf 50 eingebunden werden, wenn dieser im Wärmepumpenbetrieb betrieben wird.

Ein weiterer Unterschied zur Ausführungsform nach Figur 1 besteht bei der Ausführungsform des Kühlsystems 1 gemäß Figur 2 darin, dass dort auch ein Inverter 41 in einen entsprechenden Teilkreislauf 141 des zweiten Kühlkreislaufs 20 eingebunden ist, um den Inverter 41 entsprechend vermittels des zweiten, z.B. dielektrischen, Kühlmittels, das im zweiten Kühlkreislauf 20 strömt, temperieren zu können.

In Figur 3 ist eine weitere Ausführungsform des Kühlsystems 1 gezeigt, wobei der erste Kühlkreislauf 10 und der zweite Kühlkreislauf 20 miteinander über Schnittstellenwärmeübertrager 8, 9 zwecks eines Wärmetauschs gekoppelt sind. Ferner ist ein weiterer Wärmetauscher als Frontendwärmetauscher 60 und somit als Wärmesenke im Frontbereich des batterieelektrisch betriebenen Fahrzeugs (nicht gezeigt) angeordnet, wobei der Frontendwärmetauscher 60 von Luft L durchströmt werden kann, um entsprechend als Wärmesenke dienen zu können. Der erste Kühlkreislauf 10 wird von einem ersten Kühlmittel, z.B. in Form eines Wasser-Glykol-Gemisches, durchströmt. Der zweite Kühlkreislauf 20 wird, wie auch zu den Figuren 1 und 2 beschrieben, von einem zweiten Kühlmittel, das z.B. ein dielektrisches Kühlmittel sein kann, durchströmt. Jeder der Kühlkreisläufe 10, 20 umfasst ein Thermomanagementmodul 11 bzw. 21, über das jeweils die einzelnen Teilkreisläufe der beiden Kühlkreisläufe 10, 20 geführt sind. Der Frontendwärmetauscher 60 ist über einen Teilkreislauf 160 mit dem Thermomanagementmodul 11 verbunden. Beispielhaft sind im Kühlkreislauf 10 ferner eine Leistungselektronik 42, die einen Inverter und ein Steuergerät umfassen kann, ein Wärmeerzeuger 43, der beispielsweise in PTC-Heizer sein kann, und eine Wärmesenke 44, die beispielsweise ein Chiller/Verdampfer sein kann, gezeigt. Die Leistungselektronik 42 ist über einen Teilkreislauf 142, der Wärmeerzeuger bzw. die Wärmequelle 43 über einen Teilkreislauf 143 und die Wärmesenke 44 über einen Teilkreislauf 144 mit dem Thermomanagementmodul 11 verbunden. Auf Seiten des ersten Kühlkreislaufs 10 umfasst der Schnittstellenwärmeübertrager 8 eine Wärmesenke 45, die über einen entsprechenden Teilkreislauf 145 ebenfalls mit dem Thermomanagementmodul 11 verbunden ist. Ferner umfasst der Schnittstellenwärmeübertrager 9 auf Seiten des ersten Kühlkreislaufs 10 eine Wärmequelle 46, die über einen Teilkreislauf 146 ebenfalls mit dem Thermomanagementmodul 11 verbunden ist.

Der zweite Kühlmittelkreislauf 20 umfasst in der in Figur 3 gezeigten Prinzipskizze die Leistungselektronik 32, den Energiespeicher 30, den Elektromotor 31, die Ladeleitung 33 mit endseitigem Ladeanschlussverbinder 34 sowie entsprechende Teilkreisläufe 130, 131, 132, 233, die jeweils mit dem Thermomanagementmodul 21 verbunden sind. Ferner sind auch die beiden Schnittstellenwärmeübertrager 8, 9 über einen jeweiligen Teilkreislauf 80, 90 mit dem Thermomanagementmodul 21 verbunden. Jedes der beiden Thermomanagementmodule 11, 21 umfasst jeweils Pumpen 110 bzw. 210 und Ventile 111 bzw. 211 zum Steuern der Massenströme in die einzelnen Teilkreisläufe der beiden Kühlkreisläufe 10 bzw. 20 und zum Fördern der entsprechenden Kühlmittel, also des ersten Kühlmittels in den Teilkreisläufen des ersten Kühlkreislaufs 10 und des zweiten Kühlmittels, des z.B. dielektrischen Kühlmittels, in den Teilkreisläufen des zweiten Kühlkreislaufs 20.

Über die beiden Schnittstellenwärmeübertrager 8, 9 ist jeweils ein geeigneter Wärmetausch zwischen den Kühlkreisläufen 10, 20 zum geeigneten Temperieren von deren einzelnen Fahrzeugkomponenten, die über den jeweiligen Kühlkreislauf 10 bzw. 20 entsprechend temperiert werden sollen, möglich.

Die beiden Thermomanagementmodule 11 bzw. 21 können in einer alternativen Ausführungsvariante auch in ein Gesamt-Thermomanagementmodul zusammen gelegt sein. Es ist somit nicht erforderlich, zwei separate Thermomanagementmodule vorzusehen, jeweils eines für jeden der beiden Kühlkreisläufe 10 bzw. 20, sondern beide Kühlkreisläufe 10, 20 können auch über ein einziges Thermomanagementmodul geführt werden, in dem eine entsprechende Trennung der einzelnen Teilkreisläufe des ersten Kühlkreislaufs 10 und zweiten Kühlkreislauf 20 erfolgen kann. Auch das Zusammenfassen der beiden Thermomanagementmodule 11, 21 in einer baulichen Einheit ist möglich.

In Figur 4 ist ein Aufbau des Kühlsystems 1 mit den beiden Kühlkreisläufen 10, 20 sowie dem Kältemittelkreislauf 50 skizziert. Hierbei ist der Kältemittelkreislauf 50, in dem Kältemittel strömt, über eine Wärmesenke 46 mit dem zweiten Kühlkreislauf 20 zum Ermöglichen eines Wärmetauschs gekoppelt. Der zweite Kühlkreislauf 20 ist ebenfalls mit dem ersten Kühlkreislauf 10 gekoppelt, wobei dies im Bereich einer Wärmequelle 47, die als Wärmequelle im Hinblick auf die zu erwärmenden Fahrzeugkomponenten dient, gekoppelt. Der zweite Kühlkreislauf 20 ist ferner über eine zweite Wärmesenke 48 ebenfalls mit dem Kältemittelkreislauf 50 verbunden. Der zweite Kühlkreislauf 20 umfasst in der in Figur 4 gezeigten Ausführungsvariante nicht nur die Leistungselektronik 32, sondern auch eine zweite Leistungselektronik 49, die in Reihe zueinander und parallel zum Charger 40 sowie zu der Wärmesenke 48 geschaltet sind. Ähnlich wie in Figur 2 ist der Charger 40 im zweiten Kühlkreislauf 20 in denselben Teilkreislauf von diesem wie die Ladeleitung 33 und der Ladeanschlussverbinder 34 eingebunden. Zum Fördern des zweiten Kühlmittels, des insbesondere dielektrischen Kühlmittels, durch die einzelnen Teilkreisläufe des zweiten Kühlkreislaufs 20 sind zwei Pumpen 212, 213 sowie zwei Ventile 214, 215 in Figur 4 gezeigt. Dementsprechend wird ein Erwärmen des Energiespeichers 30 über Wärmetausch aus dem ersten Kühlkreislauf 10 über die Wärmequelle 47 in den zweiten Kühlkreislauf 20 ermöglicht und ein Kühlen des Energiespeichers 30 über den Wärmetausch mit dem Kältemittelkreislauf 50 über die Wärmesenke 46 ermöglicht. Ein Kühlen der Leistungselektronik 32 und der Leistungselektronik 49 sowie des Chargers 40 und der Ladeleitung 33 sowie des Ladeanschlussverbinders 34 wird über einen Wärmetausch ebenfalls mit dem Kältemittelkreislauf 50 über die Wärmesenke 48 ermöglicht. Der Elektromotor 31 ist in der in Figur 4 gezeigten Ausführungsvariante in einen separaten Teilkreislauf des ersten Kühlkreislaufs 10 integriert. Er kann jedoch auch in einen separaten Teilkreislauf des zweiten Kühlkreislaufs 20 integriert werden.

Über den Kältemittelkreislauf 50 können deutlich niedrigere Temperaturen zum Kühlen bereitgestellt werden als dies über den ersten Kühlkreislauf 10 für den zweiten Kühlkreislauf 20 bzw. die in diesen integrierten Fahrzeugkomponenten möglich ist. Der Kältemittelkreislauf 50 sowie der erste Kühlkreislauf 10 können in Richtung des zweiten Kühlkreislaufs 20 jeweils eine Wärmequelle und eine Wärmesenke im Bereich eines jeweiligen Schnittstellenwärmeübertragers 8, 9 zur Verfügung stellen, um einen geeigneten Wärmetausch mit dem zweiten Kühlkreislauf 20 zu ermöglichen. Dies ist beispielhaft in Figur 5 skizziert. Auch der erste Kühlkreislauf 10 kann über einen entsprechenden Schnittstellenwärmeübertrager 8, hier eine Wärmesenke, mit dem Kältemittelkreislauf 50 gekoppelt sein. Über eine solche Wärmesenke können dementsprechend auch die Fahrzeugkomponenten, die durch den ersten Kühlkreislauf 10 temperiert werden, entsprechend gekühlt werden. Ferner ist der Kältemittelkreislauf 50 mit einer weiteren Wärmequelle 51 und Wärmesenke 52 versehen, die eine jeweilige Schnittstelle z.B. zur an einem Fahrzeug frontseitig zuströmenden Luft L bzw. Umgebungsluft oder zu einem anderen Medium bilden, mit dem ein entsprechender Wärmetausch erfolgen kann oder soll.

Beispielhaft umfasst jeder der Kühlkreisläufe 10, 20 einzelne Teilkreisläufe, die lediglich angedeutet und beim Kühlkreislauf 10 mit den Bezugszeichen 170, 717, 172, 173 und beim Kühlkreislauf 20 mit den Bezugszeichen 240, 241, 242bezeichnet sind. Zwecks eines Beheizens der Fahrzeugkomponenten des zweiten Kühlkreislaufs 20 ist beispielhaft auch eine Heizeinrichtung 220 skizziert und in einen Teilkreislauf 320 von diesem integriert. Ferner umfasst jeder der beiden Kühlkreisläufe 10, 20 ein jeweiliges Thermomanagementmodul 11 bzw. 21, dem jeweils eine Steuerungs- und/oder Regelungseinheit/ECU 70 bzw. 71 zugeordnet ist. Wie bereits zu Figur 3 erwähnt, können beide Thermomanagementmodule 11, 21 auch in ein Gesamtmodul bzw. in eine bauliche Einheit zusammengefasst werden. Ebenfalls kann lediglich eine Steuerungs- und/oder Regelungseinheit/ECU 7 anstelle der jeweiligen Steuerungs- und/oder Regelungseinheit/ECU 70 bzw. 71 der beiden Thermomanagementmodule 11 bzw. 21 vorgesehen werden. In eine solche bauliche Einheit der beiden Thermomanagementmodule 11, 21 in Form eines Gesamt-Thermomanagementmoduls können auch Schnittstellenwärmeübertrager integriert werden. Es ist somit ein Zusammenlegen nicht nur der Thermomanagementmodule zu einem Gesamt-Thermomanagementmodul und der jeweiligen moduleigenen Steuerungs- und/oder Regelungseinheiten/ECUs zu einer einzigen Steuerungs- und/oder Regelungseinheit/ECU möglich, sondern in ein solches Gesamt-Thermomanagementmodul können ferner Schnittstellenwärmeübertrager ebenfalls mit aufgenommen werden.

Alle vorstehend genannten Teilkreisläufe des ersten Kühlkreislaufs 10 und des zweiten Kühlkreislaufs 20 und die genannten zu kühlenden Fahrzeugkomponenten sind jeweils nur Beispiele. Es können auch nur Teile von diesen vom ersten Kühlkreislauf 10 bzw. zweiten Kühlkreislauf 20 umfasst sein. Ferner können auch mehr und/oder andere Fahrzeugkomponenten in Teilkreisläufen angeordnet sein bzw. werden. Entsprechendes gilt auch für das jeweilige Thermomanagementmodul 2 bzw. 11, 21, wobei die Anzahl an in oder an diesem angeordneten Pumpen 3, 110, 210 und Ventilen 4, 111, 211 sich nach der Anzahl der vorgesehenen und über das jeweilige Thermomanagementmodul 2 bzw. 11, 21 geführten Teilkreisläufe und auch der jeweils gewählten Ventilart, also z.B. 2/2-, 3/2- oder 4/2-Wegeventil, richtet.

Neben den im Vorstehenden beschriebenen und in den Figuren gezeigten Ausführungsvarianten eines Kühlsystems zum Kühlen von Fahrzeugkomponenten eines batterieelektrisch betriebenen Fahrzeugs, wobei das Kühlsystem zumindest einen ersten Kühlkreislauf mit zumindest einem Kühlmittel, z.B. in Form eines Wasser/Glykol-Gemischs ,und zumindest einen zweiten Kühlkreislauf mit zumindest einem zweiten Kühlmittel, z.B. in Form eines dielektrischen oder isolierenden Kühlmittels, umfasst, können noch zahlreiche weitere gebildet werden, bei denen das zweite Kühlmittel zum Temperieren von Hochvolt-Fahrzeugkomponenten dient und hierbei nicht nur zum Temperieren des zumindest einen Energiespeichers des batterieelektrisch betriebenen Fahrzeugs, sondern auch zumindest einer weiteren Fahrzeugkomponente, wie beispielsweise der Ladeleitung zum Laden des Energiespeichers, des Elektromotors, der Leistungselektronik, der Motorleitung zwischen Elektromotor und Energiespeicher etc. bzw. wobei zum geeigneten Temperieren der Fahrzeugkomponenten, also insbesondere zum differenzierten Kühlen von diesen beim Schnellladen und Abruf von hohen Leistungen im Fahrbetrieb des batterieelektrisch betriebenen Fahrzeugs der erste Kühlkreislauf, der zweite Kühlkreislauf und ein Kältemittelkreislauf miteinander zwecks eines Wärmeaustauschs geeignet gekoppelt bzw. verbunden werden können.

### Bezugszeichenliste

- 1: Kühlsystem
- 2: Thermomanagementmodul
- 3: Pumpe
- 4: Ventil
- 5: Temperatursensor
- 6: Temperatursensor
- 7: Steuerungs- und/oder Regelungseinheit/ECU
- 8: Schnittstellenwärmeübertrager
- 9: Schnittstellenwärmeübertrager
- 10: erster Kühlkreislauf
- 11: Thermomanagementmodul
- 20: zweiter Kühlkreislauf
- 21: Thermomanagementmodul
- 30: Energiespeicher/Traktionsbatterie
- 31: Elektromotor
- 32: Leistungselektronik
- 33: Ladeleitung
- 34: Ladeanschlussverbinder
- 35: Wärmequelle
- 36: Wärmesenke
- 37: Wärmetauscher von 33
- 38: Motorleitung
- 39: Wärmetauscher von 38
- 40: Charger
- 41: Inverter
- 42: Leistungselektronik
- 43: Wärmeerzeuger/ Wärmequelle
- 44: Wärmesenke
- 45: Wärmesenke
- 46: Wärmequelle
- 47: Wärmequelle
- 48: Wärmesenke
- 49: Leistungselektronik
- 50: Kältemittelkreislauf
- 51: Wärmequelle
- 52: Wärmesenke
- 60: Frontendwärmetauscher
- 70: Steuerungs- und/oder Regelungseinheit/ECU
- 71: Steuerungs- und/oder Regelungseinheit/ECU
- 80: Teilkreislauf
- 90: Teilkreislauf
- 100: Teilkreislauf
- 110: Pumpe
- 111: Ventil
- 130: Teilkreislauf
- 131: Teilkreislauf
- 132: Teilkreislauf
- 133: Teilkreislauf
- 135: Teilkreislauf
- 136: Teilkreislauf
- 138: Teilkreislauf
- 140: Teilkreislauf
- 141: Teilkreislauf
- 142: Teilkreislauf
- 143: Teilkreislauf
- 144: Teilkreislauf
- 145: Teilkreislauf
- 146: Teilkreislauf
- 150: Teilkreislauf
- 160: Teilkreislauf
- 170: Teilkreislauf
- 171: Teilkreislauf
- 172: Teilkreislauf
- 173: Teilkreislauf
- 210: Pumpe
- 211: Ventil
- 212: Pumpe
- 213: Pumpe
- 214: Ventil
- 215: Ventil
- 220: Heizeinrichtung
- 233: Teilkreislauf
- 240: Teilkreislauf
- 241: Teilkreislauf
- 242: Teilkreislauf
- 320: Teilkreislauf
- 330: erster Ladeleitungsstrang
- 331: zweiter Ladeleitungsstrang
- 332: elektrischer Anschlussverbinder/Elektrostecker
- 333: Kühlmittelleitung
- 338: Kühlmittelleitung
- 430: Kühlmittelleitung
- 431: Kühlmittelleitung
- 432: fluidischer Verbinder/Steckverbinder
- 433: Teilkreislauf
- 434: Kühlmittelleitung
- L: Luft

## Patentansprüche

1. Kühlsystem (1) zum Kühlen von Fahrzeugkomponenten, insbesondere eines Energiespeichers (30), eines batterieelektrisch betriebenen Fahrzeugs, wobei das Kühlsystem (1) zumindest einen ersten Kühlkreislauf (10) mit zumindest einem ersten Kühlmittel und zumindest einem zweiten Kühlkreislauf (20) mit zumindest einem zweiten Kühlmittel umfasst, und wobei das zumindest eine zweite Kühlmittel zum Temperieren von Hochvolt-Fahrzeugkomponenten ausgebildet ist,
**dadurch gekennzeichnet, dass**
der zumindest eine zweite Kühlkreislauf (20) zum Temperieren zumindest zweier Fahrzeugkomponenten (30, 31, 32, 33, 34, 38) dient, von denen eine der Energiespeicher (30) des batterieelektrisch betriebenen Fahrzeugs ist.

2. Kühlsystem (1) nach Anspruch 1,
**dadurch gekennzeichnet, dass**
das zumindest eine zweite Kühlmittel ein dielektrisches oder ein isolierendes Kühlmittel ist.

3. Kühlsystem (1) nach Anspruch 1 oder 2,
**dadurch gekennzeichnet, dass**
der zumindest eine zweite Kühlkreislauf (20) zumindest eine Wärmequelle (35) und zumindest eine Wärmesenke (36) enthält oder
der zumindest eine zweite Kühlkreislauf (20) nur eine Wärmesenke (36) umfasst, wobei die zu temperierenden Fahrzeugkomponenten ausreichend gut isoliert sind oder eine Wärmequelle direkt in dem zumindest einen Energiespeicher (30) angeordnet ist,
insbesondere die Wärmesenke Teil des ersten Kühlkreislaufs (10) und Teil des zweiten Kühlkreislaufs (20) ist.

4. Kühlsystem (1) nach einem der vorstehenden Ansprüche,
**dadurch gekennzeichnet, dass**
der zumindest eine erste Kühlkreislauf (10) und der zumindest eine zweite Kühlkreislauf (20) aus jeweils zumindest zwei Teilkreisläufen bestehen, die unabhängig voneinander betreibbar sind.

5. Kühlsystem (1) nach einem der vorstehenden Ansprüche,
**dadurch gekennzeichnet, dass**
zumindest eine Steuerungs- und/oder Regelungseinheit (7, 71) zum Steuern und/oder Regeln des zumindest einen zweiten Kühlkreislaufs (20) und zumindest ein Temperatursensor (5, 6) vorgesehen sind, wobei die zumindest eine Steuerungs- und/oder Regelungseinheit (7, 71) durch Abfragen der von dem zumindest einen Temperatursensor (5, 6) ermittelten Temperaturwerte die Temperatur der zu temperierenden Fahrzeugkomponenten (30, 33, 34) überwacht und Vorlauftemperaturen und/oder den zumindest einen Kühlmittelmassenstrom an zweitem Kühlmittel regelt.

6. Kühlsystem (1) nach Anspruch 4 oder 5,
**dadurch gekennzeichnet, dass**
zumindest ein Teilkreislauf des zumindest einen zweiten Kühlkreislaufs (20) eigenständig betreibbar ist, wobei der zumindest eine Teilkreislauf (130, 140) den zumindest einen Energiespeicher (30) bzw. zumindest einen Charger (40), zumindest eine Ladeleitungskühleinrichtung, insbesondere einen Wärmetauscher (37), zum Kühlen einer Ladeleitung (33) und zumindest eine Ladeanschlussverbinder-Kühleinrichtung, insbesondere einen Wärmetauscher (39), zum Kühlen eines Ladeanschlussverbinders (34) umfasst.

7. Kühlsystem (1) nach einem der vorstehenden Ansprüche,
**dadurch gekennzeichnet, dass**
eine Parallelschaltung von zu temperierenden Komponenten vorgesehen ist, insbesondere eines Ladeanschlussverbinders (34), einer Ladeleitung (33) und eines Chargers (40) einerseits und eines Energiespeichers (30) andererseits, wobei die zu temperierenden Komponenten jeweils temperaturüberwacht sind.

8. Kühlsystem (1) nach einem der vorstehenden Ansprüche,
**dadurch gekennzeichnet, dass**
zumindest ein Wärmeübertrager (37) einer Ladeleitung (33) zugeordnet ist und sich zumindest teilweise entlang von dieser erstreckt.

9. Kühlsystem (1) nach einem der vorstehenden Ansprüche,
**dadurch gekennzeichnet, dass**
zumindest eine Kühlmittelleitung (333, 430, 431), insbesondere ein Kühlmittelschlauch, innen durch eine Ladeleitung (33) hindurchgeführt ist, insbesondere die Ladeleitung (33) an der Kühlmittelleitung (333, 430, 431), insbesondere am Kühlmittelschlauch, verseilt ist.

10. Kühlsystem (1) nach einem der vorstehenden Ansprüche,
**dadurch gekennzeichnet, dass**
zumindest ein Sensor, insbesondere Temperatursensor (6), an einer Ladeleitung (33) zum Erfassen der Temperatur angeordnet ist, insbesondere im Bereich eines Ladeanschlussverbinders (34), insbesondere Anschlusssteckers, der Ladeleitung (33).

11. Kühlsystem (1) nach einem der vorstehenden Ansprüche,
**dadurch gekennzeichnet, dass**
zumindest ein Thermomanagementmodul (2, 11, 21) vorgesehen ist zum Trennen zumindest zweier Teilkreisläufe zum getrennten Temperieren zumindest zweier Fahrzeugkomponenten, wobei das zumindest eine Thermomanagementmodul (2, 11, 21) mit Vor- und Rückläufen der zumindest zwei Teilkreisläufe verbindbar oder verbunden ist.

12. Kühlsystem (1) nach dem Oberbegriff des Anspruchs 1 oder nach einem der vorstehenden Ansprüche
**dadurch gekennzeichnet, dass**
der zumindest eine erste Kühlkreislauf (10), der zumindest eine zweite Kühlkreislauf (20) und ein Kältemittelkreislauf (50) zum Wärmeaustausch miteinander gekoppelt oder verbunden sind.

13. Kühlsystem (1) nach Anspruch 12,
**dadurch gekennzeichnet, dass**
der zumindest eine erste Kühlkreislauf (10) zumindest eine Wärmesenke, insbesondere über einen Schnittstellenwärmeübertrager (8), für den zumindest einen zweiten Kühlkreislauf (20) bereitstellt und/oder der zumindest eine erste Kühlkreislauf (10) zumindest eine Wärmequelle, insbesondere über einen Schnittstellenwärmeübertrager (9), für den zumindest einen zweiten Kühlkreislauf (20) bereitstellt und/oder der zumindest eine Kältemittelkreislauf (50) zumindest eine Wärmesenke (46, 48), insbesondere über einen Schnittstellenwärmeübertrager, für den zumindest einen zweiten Kühlkreislauf (20) bereitstellt.

14. Kühlsystem (1) nach einem der Ansprüche 12 oder 13,
**dadurch gekennzeichnet, dass**
der zumindest eine Kältemittelkreislauf (50) zumindest eine Wärmesenke (46, 48), insbesondere einen Schnittstellenwärmeübertrager, für den zumindest einen zweiten Kühlkreislauf (20) bereitstellt und der zumindest eine erste Kühlkreislauf (10) zumindest eine Wärmequelle (47), insbesondere einen Schnittstellenwärmeübertrager, für den zumindest einen zweiten Kühlkreislauf (20) bereitstellt.

15. Batterieelektrisch betriebenes Fahrzeug mit Fahrzeugkomponenten, insbesondere zumindest einem Energiespeicher (30), und zumindest einem Kühlsystem zum Temperieren der Fahrzeugkomponenten, **dadurch gekennzeichnet, dass**
das Kühlsystem ein Kühlsystem (1) nach einem der vorstehenden Ansprüche ist.
